# EUROPEAN PATENT SPECIFICATION

(11) **EP 2 168 362 B1**
(45) Date of publication and mention of the grant of the patent: **13.08.2014**
(21) Application number: 08776512.9
(22) Date of filing: 25.06.2008
(51) Int. Cl.: H04M 1/02

(54) **ELECTRONIC DEVICE SLIDE MECHANISM**
SCHIEBEMECHANISMUS FÜR EIN ELEKTRONISCHES GERÄT
MÉCANISME COULISSANT D'UN DISPOSITIF ÉLECTRONIQUE

(30) Priority: 29.06.2007 US 937712 P; 26.09.2007 US 904505
(43) Date of publication of application: 31.03.2010
(73) Proprietor: Nokia Corporation, 02610 Espoo (FI)
(72) Inventor: LINDGREN, Okko, FI-41800 Korpilahti (FI); LIPPONEN, Mika Petri, FI-40500 Jyvaskyla (FI); JARVITALO, Toni, FI-40640 Jyvaskyla (FI); RANNIKKO, Saara, FI-24240 Salo (FI)
(74) Representative: Potter Clarkson LLP
(86) International application number: PCT/IB2008/052553
(87) International publication number: WO 2009/004536

(56) References cited:
- WO-A-2006/098590
- DE-A1-102008 017 783
- JP-A- 2005 269 070
- KR-Y1- 200 361 808
- US-A1- 2007 060 220
- NOKIA: "Nokia N95-1: Get started"[Online] March 2007 (2007-03), XP002505206 www.nokia.com Retrieved from the Internet: URL:http://nds1.nokia.com/phones/files/gui des/Nokia_N95-1_release2_GS_en.pdf> [retrieved on 2008-11-19]

## Description

### BACKGROUND OF THE INVENTION

### Field of the Invention

The invention relates to an electronic device and, more particularly, to a slide mechanism for an electronic device.

### Brief Description of Prior Developments

As electronic devices continue to become more sophisticated, these devices provide an increasing amount of functionality by including such applications as, for example, a mobile phone, digital camera, video camera, navigation system, gaming capabilities, and internet browser applications. Many of these devices with increased functionality have more than one configuration. Electronic devices having slidable housing members, such as a slide phone for example, proving multiple configurations are known in the art. As consumers demand increased functionality from electronic devices, there is a need to provide improved devices having increased capabilities while maintaining robust and reliable product configurations. Accordingly, there is a desire to provide an improved electronic device slide mechanism.

WO 2006098590 relates to a sliding unit and an electronic device using the same, which can connect, in sliding manner, a transmitting part with a receiving part of a cellular phone that opens/closes the transmitting part and the receiving part in sliding manner, by connecting each section with the transmitting part and the receiving part of the sliding-type cellular phone.

Nokia "N95-1: Get started" (www.nokia.com, retrieved from internet on 10 August 2010: URL: http://nds1.nokia.com/phones/files/guides/Nokia_N95-1_release2_GS_en.pdf) relates to a mobile phone which has slidable housings.

JP 2005269070 describes a semiautomatic slider unit, for sliding a first case and a second case relatively in one direction, comprising a cam member fixed to the side of any one of the first and second cases, a rotating member fixed rotatably to the cam member and supported rotatably in an elongated guide hole provided on the side of the other of the first and second cases, and a slider provided between the rotating member and the cam member while butting against the cam part of the cam member at the forward end and being urged to slide in one direction.

The prior art does not provide for a second connecting end of the resilient actuator configured to be movably connected to a slot of a second plate and configured to slide or move or roll along a first profile of a cam section, such that:
as the first plate (40) is slid with respect to the second plate (42) in a first direction against the bias of the resilient actuator (44) from a first position to a second position, during which the first profile (66) and the second connecting end (58) are operably engaged by virtue of the resilient actuator (44) bias, the second connecting end (58) of the resilient actuator (44) is configured to move by:
   sliding along the slot (60); and
   sliding or rolling along the first profile (66) of the cam section (64); and
   as the first plate (40) is slid with respect to the second plate (42) in a second direction opposite to the first direction, from the first position to a third position, the third position being a position in which the first profile (66) and the second connecting end (58) are operably disengaged:
      the first connecting end (56) is rotated about its rotatable connection to the first plate (40);
      the second connecting end (58) is rotated within the slot (60); and
      the resilient actuator (44) is semi-automatically rotated through a first movement portion where the resilient actuator (44) is moved to overcome the bias of the resilient actuator (44) and a second movement portion which is automatic under the bias of the resilient actuator (44).

### SUMMARY OF THE INVENTION

The invention is directed to an apparatus and a method as set out in the independent claims. Advantageous embodiments are set out in the dependent claims.

In accordance with one aspect described herein, a portable electronic device is disclosed. The portable electronic device includes a housing, electronic circuitry, and a slide mechanism. The housing includes a first housing member and a second housing member. The electronic circuitry is mounted in the housing. The slide mechanism is between the first housing member and the second housing member. The slide mechanism includes a cam section and an actuator. The cam section is configured to be connected to a first housing member. The actuator is configured to contact a first side of the cam section. A first end of the actuator is configured to be movably connected to the first housing member. A second end of the actuator is configured to be movably connected to a second housing member. The second housing member is configured to be movable in a first direction when the actuator moves in a direction away from the cam section. The second housing member is configured to be movable in a second direction when the actuator moves along the first side of the cam section.

In accordance with another aspect described herein a portable electronic device is disclosed. The portable electronic device includes a housing, electronic circuitry, and a slide connection. The housing includes a first housing member and a second housing member. The electronic circuitry is mounted in the housing. The slide connection is adapted to slidably connect the second housing member to the first housing member. The slide connection is adapted to semi-automatically slide when an end of at least one of the housing members is moved above a top end of the portable electronic device. The slide connection is adapted to slide when an opposite end of the at least one housing member is moved below a bottom end of the portable electronic device.

In accordance with another aspect described herein a portable electronic device is disclosed. The portable electronic device includes a housing, electronic circuitry, and an actuator. The housing includes a first housing member and a second housing member. The electronic circuitry is mounted in the housing. The actuator has a first end and a second end. The first end is rotatably connected to the first housing member. The second end is slidably connected to the second housing member. The second housing member is configured to be movable in a first longitudinal direction relative to the first housing member when the actuator rotates in a first direction of rotation. The second housing member is configured to be movable in a second different longitudinal direction relative to the first housing member when the actuator rotates in a second different direction of rotation.

In accordance with another aspect described herein a method of manufacturing a portable electronic device is disclosed. A first housing member is provided. A cam section is connected to the first housing member. A first end of an actuator is rotatably connected to the first housing member. A second end of the actuator is slidably connected to a second housing member. The second end is configured to contact a side of the cam section. Electronic circuitry is installed within at least one of the housing members.

### BRIEF DESCRIPTION OF THE DRAWINGS

The foregoing aspects and other features of the invention are explained in the following description, taken in connection with the accompanying drawings, wherein:
Fig. 1 is a perspective view of a portable electronic device in a closed position;
Fig. 2 is a front elevational view of the portable electronic device shown in Fig. 1;
Fig. 3 is a front elevational view of the portable electronic device shown in Fig. 1 in a first open position;
Fig. 4 is a front elevational view of the portable electronic device shown in Fig. 1 in a second open position;
Fig. 5 is a front elevational view of a slide mechanism used in the portable electronic device shown in Fig. 1;
Fig. 6 is a cross section view taken at a rivet connection of the slide mechanism shown in Fig. 5;
Fig. 7 is a front elevational view of the slide mechanism used in the portable electronic device shown in Fig. 1 in a first open position;
Fig. 8 is a front elevational view of the slide mechanism used in the portable electronic device shown in Fig. 1 in a second open position;
Fig. 9 is a front elevational view of a slide mechanism in accordance with a second embodiment used in the portable electronic device shown in Fig. 1;
Fig. 10 is a front elevational view of the slide mechanism shown in Fig. 9;
Fig. 11 is a front elevational view of the slide mechanism shown in Fig. 10 in a first open position;
Fig. 12 is a front elevational view of the slide mechanism shown in Fig. 10 in a second open position;
Fig. 13 is a front elevational view of a slide mechanism in accordance with a third embodiment used in the portable electronic device shown in Fig. 1; and
Fig. 14 is a front elevational view of a slide mechanism in accordance with a fourth embodiment used in the portable electronic device shown in Fig. 1.

### DETAILED DESCRIPTION OF THE PREFERRED EMBODIMENT

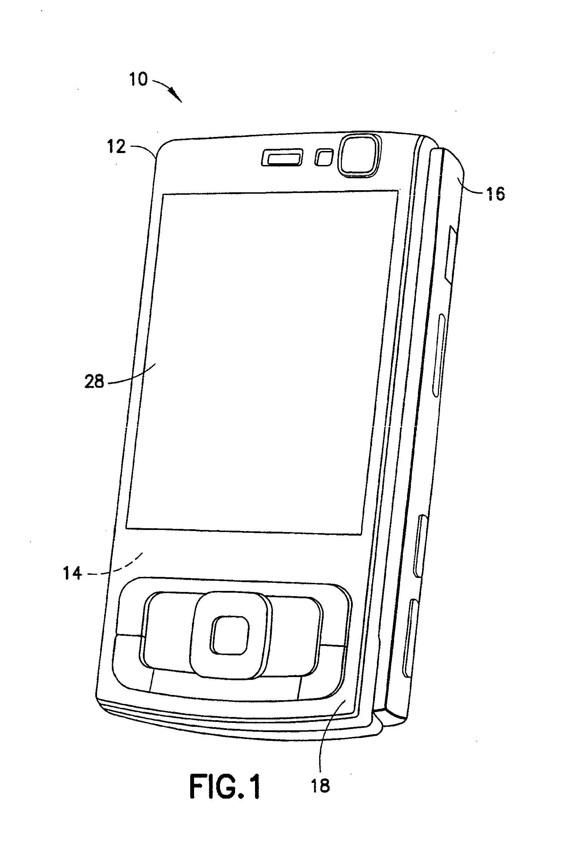

Referring to Fig. 1, there is shown a perspective view of a portable electronic device 10 incorporating features of the invention. Although the invention will be described with reference to the exemplary embodiments shown in the drawings, it should be understood that the invention can be embodied in many alternate forms of embodiments. In addition, any suitable size, shape or type of elements or materials could be used.

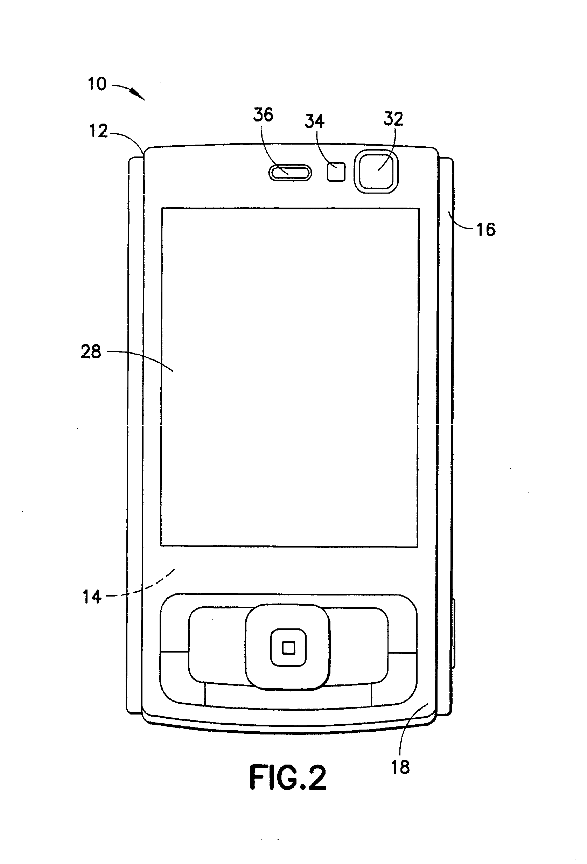

In the exemplary embodiment shown in Figs. 1 and 2, the device 10 is a multi function portable electronic device. However, in alternate embodiments, features of the exemplary embodiment of this invention could be used in any suitable type of hand-held portable electronic device such as a mobile phone, a gaming device, a music player, or a PDA, for example. In addition, as is known in the art, the device 10 can include features or applications such as a camera, a music player, a game player, or an internet browser, for example. The device 10 generally comprises a housing 12 and electronic circuitry 14. The electronic circuitry 14 includes, for example, a transceiver, a controller such as a microprocessor, a memory, etc. The housing 12 includes a first housing member 16 and a second housing member 18. It should be noted that in alternate embodiments, more than two housing members could be provided.

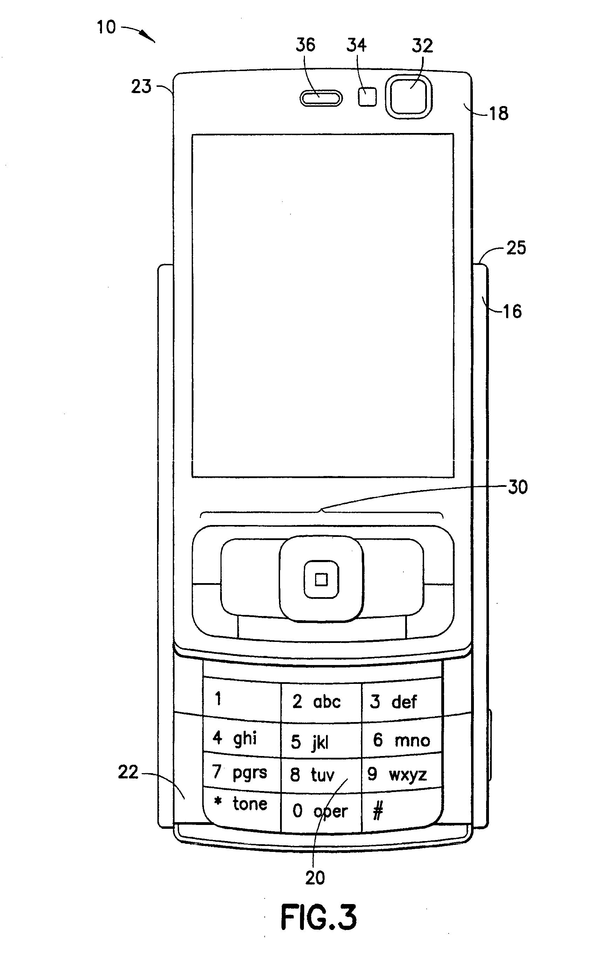

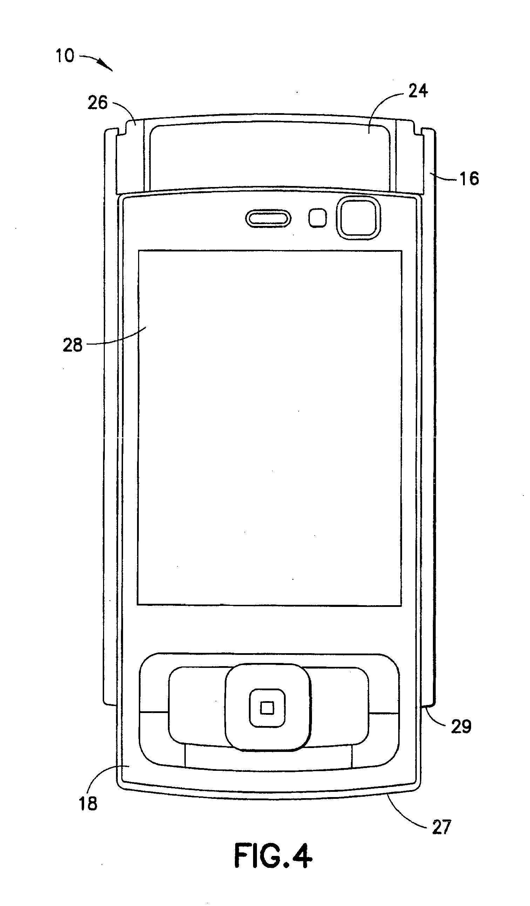

The second housing member 18 is movably connected to the first housing member 16. More specifically, the second housing member 18 is slidably mounted to the first housing member 16 between a closed position as shown in Figs. 1 and 2, a first open position as shown in Fig. 3, and a second open position as shown in Fig. 4.

As illustrated in Fig. 3, the first housing member 16 comprises a first user input region 20 at a first end 22 of the first housing member 16. The first user input region 20 may be a keyboard, a keypad, or a keymat, for example. However, it should be noted that alternate embodiments may provide any suitable type of user input region. The first user input region 20 is visible and accessible when the device 10 is in the first open position. In this first open position, a first end 23 of the second housing member 18 is above a top end 25 of the device 10.

As illustrated in Fig. 4, the first housing member 16 comprises a second user input region 24 at a second end 26 of the first housing member 16. The second user input region 24 may comprise control buttons or a keypad, for example. However, it should be noted that alternate embodiments may provide any suitable type of user input region. The second user input region 24 is visible and accessible when the device 10 is in the second open position. In this second open position, a second end 27 of the second housing member 18 is above a bottom end 29 of the device 10.

The second housing member 18 generally comprises a display screen 28 and a third user input region 30. The third user input region 30 may comprise a multi-function key and control keys, for example. However, it should be noted that alternate embodiments may provide any suitable type of user input region. Additionally, the second housing member may comprise a camera 32, a light sensor 34, and an ear piece 36, for example.

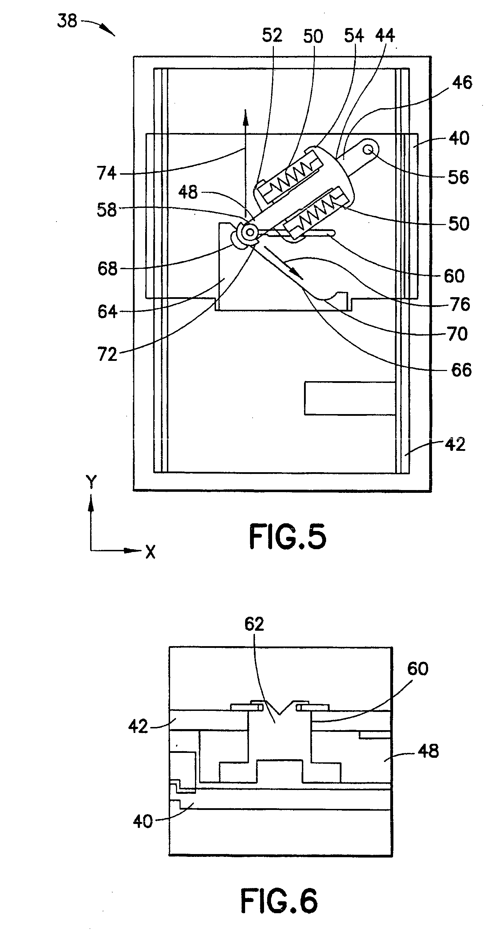

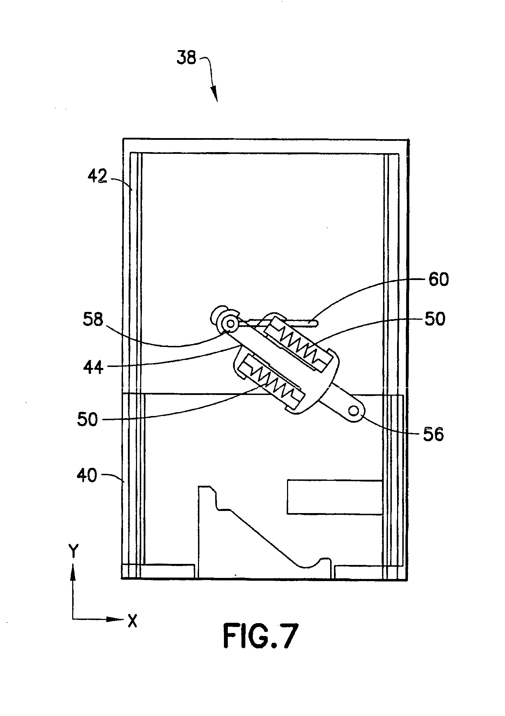

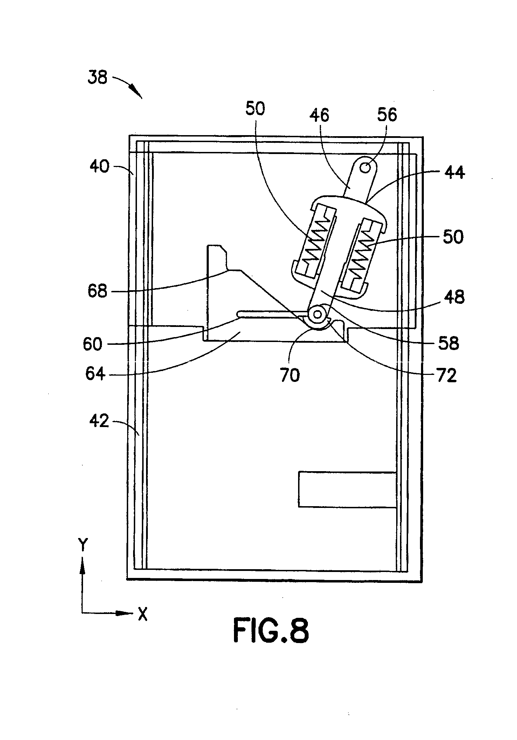

Referring now to Figs. 5-8, there is shown a slide mechanism 38 in accordance with a first embodiment of the invention. The slide mechanism (or slide connection) 38 comprises a first plate 40, a second plate 42, and a spring actuator 44. The first plate 40 is configured to be connected to the first housing member 16. The second plate 42 is configured to be connected to the second housing member 18. The plates 40, 42 may be connected to the housing members 16, 18 by any suitable means. It should be noted that in an alternate embodiment, the plates 40, 42 may be integrally formed with the housing members 16, 18. The slide mechanism 38 is between the first plate 40 and the second plate 42. The second plate 42 (and the connected second housing member 18) is slidably mounted to the first plate 40 (and the first housing member 16) between the closed position as shown in Fig. 5 (and also shown in Figs. 1-2), the first open position as shown in Fig. 7 (and also shown in Fig. 3), and the second open position as shown in Fig. 8 (and also shown in Fig. 4).

The spring actuator 44 is disposed between the first plate 40 and the second plate 42. The spring actuator comprises a first spring frame member 46, a second spring frame member 48, and spring members 50. The spring members 50 may be coil springs for example. However, alternate embodiments may provide any suitable type springs. Additionally, it should be noted that the actuator 44 does not require springs or spring members. Instead, the actuator 44 may comprise any suitable resiliently deflectable (or resiliently flexible) members. In the embodiment shown, the spring actuator 44 has two spring members, or resilient members, 50. However, in alternate embodiments, any number of spring members could be provided. Opposite ends of the spring members 50 are connected to mount ends 52, 54 of the spring frame members 46, 48. The first spring frame member 46 and the second spring frame member 48 are slidably connected to each other such that a spring force of the spring members 50 may be exerted on the mount ends 52, 54. A connecting end 56 of the first spring frame member 46 is rotatably connected to the first plate 40. The connecting end 56 may be attached to first plate, or first module, 40 by riveting or any other suitable method that allows rotational movement. A connecting end 58 of the second spring frame member 48 is slidably connected to a slot 60 of the second plate 42. The connecting end 58 may be attached to the second plate, or second module, 42 by riveting (see rivet 62 in Fig. 6) or any other suitable method that allows rotational movement, linear sliding, and moving in the slot 60. It should be noted that although the figures illustrate the slot 60 as having a substantially straight linear shape and oriented substantially perpendicular to a length of the device 10, alternate embodiments may comprise a slot having any suitable shape or orientation.

The slide mechanism 38 further comprises a cam section 64 attached to the first plate 40. The cam section 40 may be attached to the plate 40 by any suitable means. However, alternate embodiments may provide for a cam section integrally formed with the first plate. The cam section 64 comprises a first side, or first profile, 66. The first side 66 comprises a generally angled shape extending between two stop regions 68, 70. However alternate embodiments may comprise a cam section having any suitable profile shape for contacting the spring actuator 44.

The connecting end 58 of the second spring frame member 48 is configured to slide or move along the first side 66 of the cam section 64. Any suitable configuration allowing for the connecting end 58 to slide or roll between the stop regions 68, 70 of the first side may be provided, such as a roller 72 for example.

The slide mechanism 38 allows for semi-automatic movement of the housing members 16, 18. For example, to change the configuration of the device 10 from the closed position (shown in Figs. 1, 2, and 5) to the first open position, which may configure the device to operate in a phone mode for example, (shown in Figs. 3 and 7), a user would initiate a "long stroke" movement by pushing the second housing member in a vertical direction as shown by the Y-direction arrow 74. This moves the second plate 42 in the Y-direction, and moves the spring frame members 46, 48 against the force of the spring members 50. This movement is provided as the connecting end 56 rotates about the connection to the plate 40, the connecting end 58 rotates within the slot 60, and the sprint actuator 44 generally rotates in a clockwise fashion (wherein the connecting end 58 moves in a first direction of rotation) between the positions of Fig. 5 and Fig. 7. Approximately half way through the movement, the mount ends 52, 54, reach their greatest separation distance and then move towards each other with assistance of the spring force. The spring assisted relative movement of the spring frame members 46, 48 provides the semi-automatic movement between the housing members 16, 18. The semi-automatic movement comprises a first portion of the movement which is manual (by the user overcoming the force of the springs) and a second portion of the movement which is automatic by the force of the springs acting in the desired direction. This results in the first housing member being offset from the second housing member in the longitudinal direction (Y-direction 74) and allows access to the first input region 20. It should be noted that the initial manual movement may be performed by hand or by a trigger for example. The offset or opening length may be any suitable distance such as 30 mm for example. This opening length or "long stroke" can vary in different embodiments.

To return the device 10 to the configuration of Figs. 1, 2, and 5, the opposite movements are carried out in a similar fashion as the movements described above. 3. As the housing members 16, 18 are returned to the configuration of Figs. 1, 2, and 5, the movement stops at a middle locking position automatically. The "stop" movement is created by a certain combination of spring force of the spring members 50, angle of the slot 60, and the cam profile 66.

To change the configuration of the device 10 from the closed position (shown in Figs. 1, 2, and 5) to the second open position, which may configure the device to operate in a camera or movie mode, (shown in Figs. 4 and 8), a user would initiate a "short stroke" movement by pushing the second housing member in a vertical direction opposite to the Y-direction arrow 74. This moves the second plate 42 in the direction opposite to the y-direction, and moves the spring frame members 46, 48 against the force of the spring members 50. This movement is provided as the connecting end 56 rotates about the connection to the plate 40, the connecting end 58 rotates along the length of the slot 60, and the sprint actuator 44 generally rotates in a counterclockwise fashion (wherein the connecting end 58 moves in a second different direction of rotation) between the positions of Fig. 5 and Fig. 8. Approximately half way through the movement, the mount ends 52, 54, reach their greatest separation distance and then move towards each other with assistance of the spring force. The spring assisted relative movement of the spring frame members 46, 48 provides the semi-automatic movement between the housing members 16, 18. The semi-automatic movement comprises a first portion of the movement which is manual (by the user overcoming the force of the springs) and a second portion of the movement which is automatic by the force of the springs acting in the desired direction. It should be noted that the initial manual movement may be performed by hand or by a trigger for example. This "short stroke" movement moves the connecting end 58 from the first stop region 68 of the cam section 64 to the second stop region 70 (direction 76) of the cam section 64. This results in the first housing member being offset from the second housing member in the longitudinal direction (Y-direction 74) and allows access to the second input region 24. The offset or opening length may be any suitable distance such as 12mm for example. This opening length or "short stroke" can vary in different embodiments.

To return the device 10 to the configuration of Figs. 1, 2, and 5, the opposite movements are carried out in a similar fashion as the movements described above. As the housing members 16, 18 are returned to the configuration of Figs. 1, 2, and 5, the movement stops at a middle locking position automatically. The "stop" movement is created by a certain combination of spring force of the spring members 50, angle of the slot 60, and the cam profile 66.

It should be noted that the "short stoke" movement may not be a semi-automatic movement due to certain combinations of the spring members 50, the cam profile 66, and the angle of the slot 60 or because the short stroke is much longer than about 12mm. For example, in one alternate embodiment, the first portion and/or the second portion of the "short stroke" movement may comprise a manual movement. For example, in another alternate embodiment, the portion of the movement returning the housing members 16, 18 to the middle locking position may comprise a manual movement.

The invention relates to a semi-automatic dual slide mechanism for a device 10. One possible use would be for opening and closing a slide phone, thus opening and closing the first user input region 20, such as an ITU keymat for example, wherein the rotation of the spring actuator 44 away from the cam section 64 is used to create semi-automatic movement. Another possible use would be for opening and closing a slide phone, thus opening and closing the second user input region 24 wherein the rotation of the spring actuator 44 along the cam profile 66 is used to create the semi-automatic movement. Additionally, it should be noted that in alternate embodiments, multi-movements (more than two movements) of the housing members 16, 18 to same direction or different directions could also be provided by the disclosed slide mechanism.

Conventional configurations provide spring actuators with semi-automatic function in one direction slides. In one directional slides, both ends of actuator are riveted or some other way stationarily fixed to the sledges or plates in all directions. Dual slides are conventionally done with a spring actuator that provides a force in a horizontal direction (direction perpendicular to Y-direction 74).

The disclosed slide mechanism provides slide movement in the vertical/longitudinal direction (Y-direction 74). However, it should be noted that the slide mechanism may provide additional slide movements in any suitable direction. Additionally, the disclosed slide mechanism provides the novelty and advantage of combining the two spring assisted sliding principles of the turning spring principle (or "long stroke" movement) and the cam/spring principle (or "short stroke" movement) while using the same spring actuator.

Further in the prior art cam/spring mechanism the spring force typically is about 90 degrees relative to the sliding direction. Whereas in the invention the spring force turns between about 30 to about 60 degrees in the cam assisted part of the movement.

The whole sliding mechanism has the advantage of the turning spring principle where the spring force mainly works in or against the sliding direction (but which has only two end positions). And the cam/spring principle which has multiple end/rest positions (but where the spring force needs to be turned about 90 degrees by help of the cam and therefore is a less efficient and less comfortable.)

The disclosed slide mechanism provides excellent semi-auto function in opening and closing of slide phone when opening and closing ITU keymat. In this solution, the movement down (or "short stroke" movement) is done so that actuator will follow the profile by sliding or with roller. Additionally, revealing and hiding ITU-keys with help of excellent semi-auto function is big advantage. This may result in commercial value wherein disclosed slide mechanism may be used across all suitable applications and competitors (including all mobile phone manufacturers) realize the benefits by this concept.

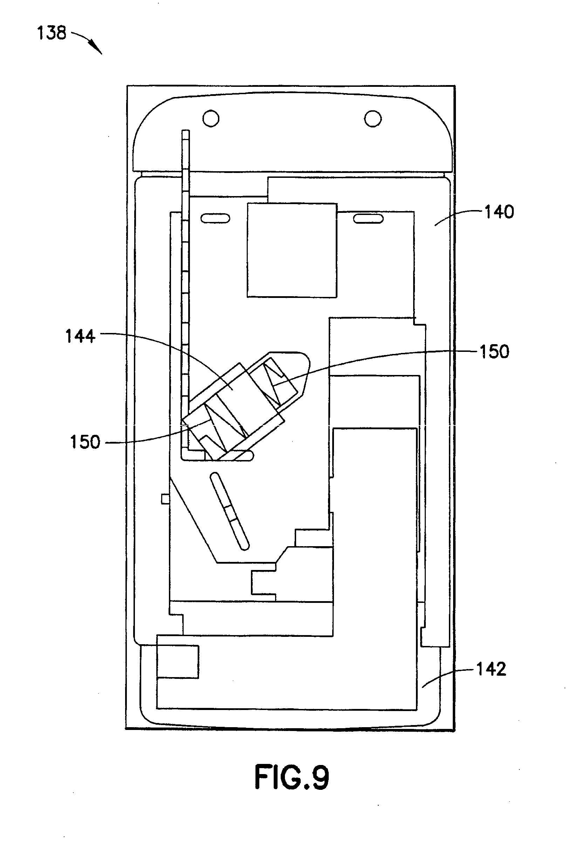

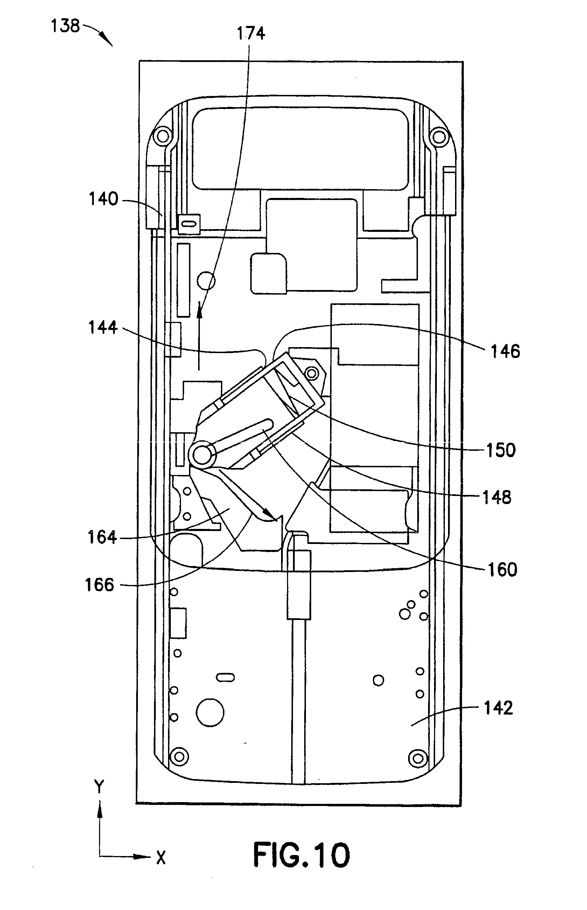

Referring now to Figs. 9-12, there is shown a slide mechanism 138 in accordance with a second embodiment of the invention. The slide mechanism 138 is similar to the slide mechanism 38. The slide mechanism 138 comprises a first plate 140, a second plate 142, and a spring actuator 144 as described above with respect to the first embodiment. One difference between the slide mechanism 138 and the slide mechanism 38 is the location and shape of the cam section 164. As illustrated in Fig. 10, the cam section 164 is adjacent to a lateral side of the first plate 140. The profile 166 of the cam section 164 comprises a non-linear shape. Additionally, the slot 160 comprises an angled configuration. The "long stroke" and "short stroke" movements of the slide mechanism 138 operate in similar fashion as described above for the first embodiment. Another difference between the slide mechanism 138 and the slide mechanism 38 is the configuration of the spring actuator 144. As illustrated in Fig. 9-12, the spring actuator 144 comprises one spring member 150. The spring member 150 may be a coil spring for example. However, alternate embodiments may provide any suitable type spring. Additionally, it should be noted that the actuator 144 does not require a spring or a spring member. Instead, the actuator 144 may comprise any suitable resiliently deflectable (or resiliently flexible) member. In the embodiment shown, the spring actuator 144 has one spring member, or resilient member, 150. However, in alternate embodiments, any number of spring members could be provided.

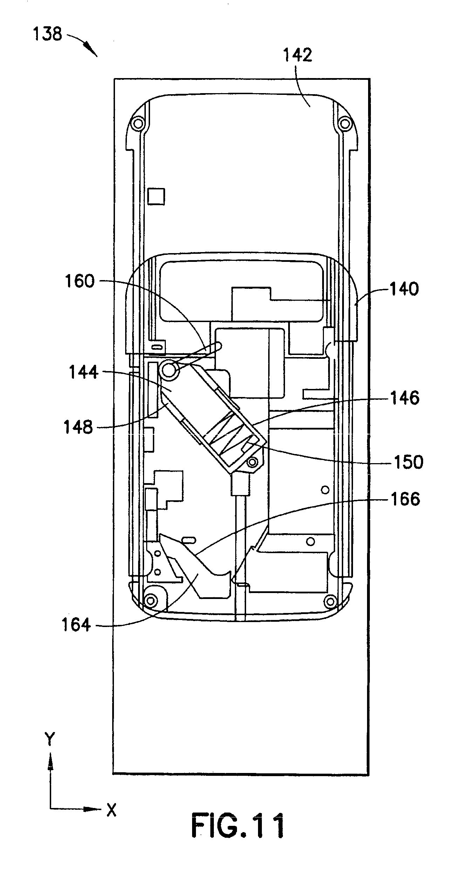

Figs. 9 and 10 illustrate a closed position. To change the configuration of the device from the closed position (shown in Figs. 1, 2, 9 and 10) to the first open position (shown in Figs. 3 and 11), a user would initiate a "long stroke" movement by pushing the second housing member in a vertical direction as shown by the Y-direction arrow 174. This moves the second plate 142 in the y-direction, and moves the spring frame members 146, 148 against the force of the spring member 150.

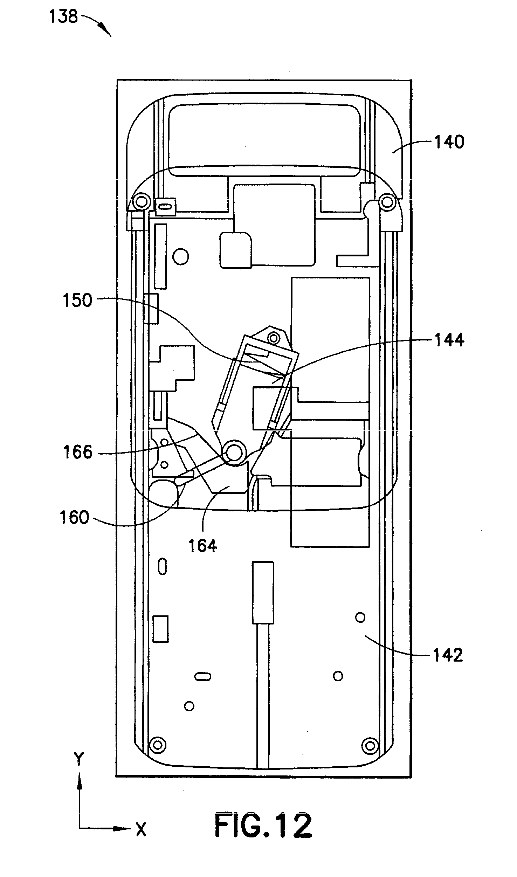

To change the configuration of the device from the closed position (shown in Figs. 1, 2, 9, and 10) to the second open position (shown in Figs. 4 and 12), a user would initiate a "short stroke" movement by pushing the second housing member in a vertical direction opposite to the Y-direction arrow 174. This moves the second plate 142 in the direction opposite to the y-direction arrow 174, and moves the spring frame members 146, 148 against the force of the spring member 150.

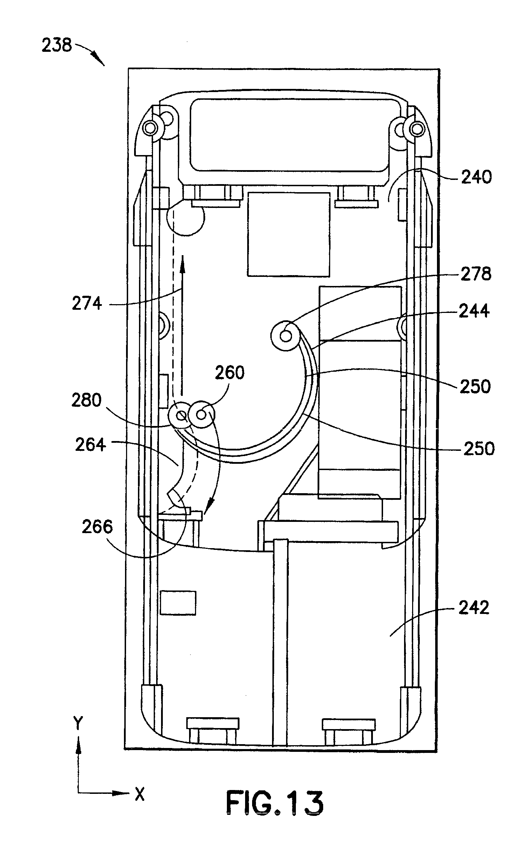

Referring now to Fig. 13, there is shown a slide mechanism 238 in accordance with a third embodiment of the invention. The slide mechanism 238 is similar to the slide mechanism 38. The slide mechanism 238 comprises a first plate 240, a second plate 242, and a spring actuator 244 as described above with respect to the first embodiment. One difference between the slide mechanism 238 and the slide mechanism 38 is the spring configuration. As illustrated in Fig. 13, the spring members 250 extend between the first plate 240 and the second plate 242 in general curved configuration. The first ends 278 of the spring members 250 are rotatably connected to the first plate 240. The second ends 280 of the spring members 250 are slidably connected to the slot 260 of the second plate 242. The spring members exert spring forces as they bend (as opposed to exerting forces as a result of extension/compression as in the first and second embodiments). The spring members 250 may be band springs or leaf springs for example. However, alternate embodiments may provide any suitable type springs. Additionally, it should be noted that the actuator 244 does not require springs or spring members. Instead, the actuator 244 may comprise any suitable resiliently deflectable (or resiliently flexible) member. In the embodiment shown, the spring actuator 244 has three spring members, or resilient members, 250. However, in alternate embodiments, any number of spring members could be provided. The "long stroke" and "short stroke" movements of the slide mechanism 238 operate in similar fashion as described above for the first embodiment.

Fig. 13 illustrates a closed position. To change the configuration of the device from the closed position (shown in Figs. 1, 2, and 13) to the first open position (shown in Figs. 3), a user would initiate a "long stroke" movement by pushing the second housing member in a vertical direction as shown by the Y-direction arrow 274. This moves the second plate 242 in the y-direction, wherein the force of the spring members 250 provides similar semi-automatic spring force to that of the first embodiment.

To change the configuration of the device from the closed position (shown in Figs. 1, 2, and 13) to the second open position (shown in Fig. 4), a user would initiate a "short stroke" movement by pushing the second housing member in a vertical direction opposite to the Y-direction arrow 274. This moves the second plate 242 in the direction opposite to the y-direction arrow 274, wherein the force of the spring members 250 provides similar semi-automatic spring force along the cam profile 266 as that of the first embodiment.

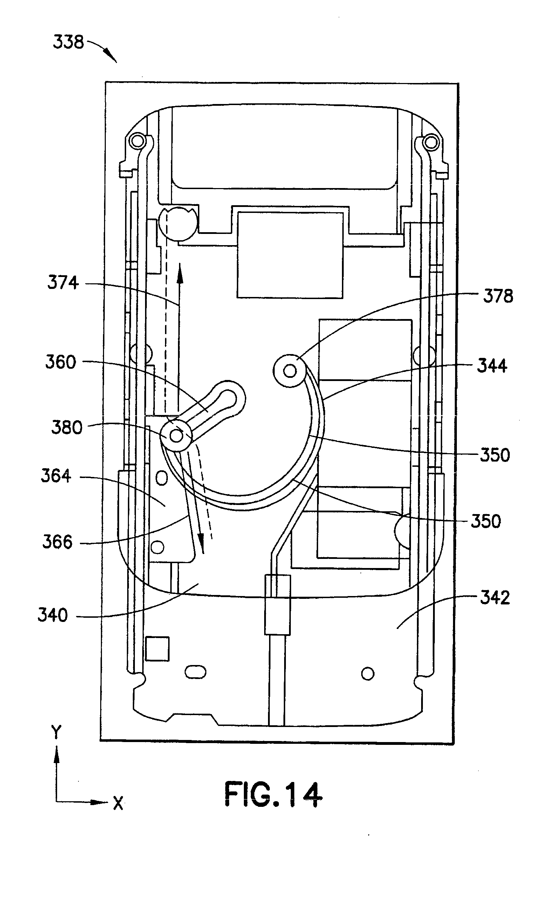

Referring now to Fig. 14, there is shown a slide mechanism 338 in accordance with a fourth embodiment of the invention. The slide mechanism 338 is similar to the slide mechanism 238. The slide mechanism 338 comprises a first plate 340, a second plate 342, and a spring actuator 344 as described above with respect to the third embodiment. One difference between the slide mechanism 338 and the slide mechanism 238 is the orientation of the slot 360 and the cam section 364. The slot 360 and the cam section 364 comprise generally angled orientations compared to that of the slot 260 and the cam section 264. These orientations allow for the same general "long stroke" and "short stroke" movements as described above. As illustrated in Fig. 14, the spring members 350 extend between the first plate 340 and the second plate 342 in general curved configuration. The first ends 378 of the spring members 350 are rotatably connected to the first plate 340. The second ends 380 of the spring members 350 are slidably connected to the slot 360 of the second plate 342. The spring members exert spring forces as they bend and operate in similar fashion as described above for the third embodiment.

The disclosed embodiments of the slide mechanism provide novel elements and features for providing the slide movement between the housing members. In particular, the disclosed slide mechanism provides a suitably sized and shaped spring actuator (which may comprise various configurations), a cam section (which may comprise various cam profile shapes) connected to one of the housing members, and a slot within one of the plates (or slider plates) of the slide mechanism. The disclosed elements provide a novel and improved slide mechanism configuration over conventional slide phones and other electronic devices comprising slide mechanisms.

It should be understood that the foregoing description is only illustrative of the invention. Various alternatives and modifications can be devised by those skilled in the art without departing from the invention. Accordingly, the invention is intended to embrace all such alternatives, modifications and variances which fall within the scope of the appended claims.

## Claims

1. An apparatus comprising a slide mechanism, the slide mechanism comprising:
a first plate (40);
a second plate (42), the second plate comprising a slot (60);
a cam section (64) comprising a first profile (66), the cam section (64) being attached to, or integrally formed with, the first plate (40); and
a resilient actuator (44),
wherein a first connecting end (56) of the resilient actuator (44) is configured to be rotatably connected to the first plate (40), and
a second connecting end (58) of the resilient actuator (44) is configured to be movably connected to the slot (60) of the second plate (42) and configured to slide or move or roll along the first profile (66) of the cam section (64), such that:
as the first plate (40) is slid with respect to the second plate (42) in a first direction against the bias of the resilient actuator (44) from a first position to a second position, during which the first profile (66) and the second connecting end (58) are operably engaged by virtue of the resilient actuator (44) bias, the second connecting end (58) of the resilient actuator (44) is configured to move by:
sliding along the slot (60); and
sliding or rolling along the first profile (66) of the cam section (64); and
as the first plate (40) is slid with respect to the second plate (42) in a second direction opposite to the first direction, from the first position to a third position, the third position being a position in which the first profile (66) and the second connecting end (58) are operably disengaged:
the first connecting end (56) is rotated about its rotatable connection to the first plate (40);
the second connecting end (58) is rotated within the slot (60); and
the resilient actuator (44) is semi-automatically rotated through a first movement portion where the resilient actuator (44) is moved to overcome the bias of the resilient actuator (44) and a second movement portion which is automatic under the bias of the resilient actuator (44).

2. The apparatus as claimed in claim 1 wherein the second plate (42) is configured to be movable in the first direction between the three positions from the third position, to the first position and then onto the second position.

3. The apparatus as claimed in claim 2 wherein the second plate (42) is configured to be movable in the second direction between the three positions, from the second position, to the first position, and then onto the third position.

4. The apparatus as claimed in any preceding claim wherein the slide mechanism is configured to automatically stop the second plate (42) at the second position when the second plate (42) moves in the first direction with respect to the first plate (40).

5. The apparatus as claimed in any preceding claim wherein the second plate (42) is configured to be manually moveable with respect to the first plate (40) in at least one direction.

6. The apparatus as claimed in any preceding claim wherein the slide mechanism is configured to semi-automatically move the first plate (40) with respect to the second plate (42) from the first position to the second position.

7. The apparatus of any preceding claim, wherein the slot (60) has a substantially straight linear shape and is configured to be oriented substantially perpendicular to the sliding axis of the first direction.

8. The apparatus of any preceding claim, wherein the apparatus is a portable electronic device.

9. The apparatus of any preceding claims, wherein the apparatus is a mobile phone, gaming device or a PDA.

10. The apparatus of claim 1, wherein the second plate (42) is configured to be movable in a first longitudinal direction relative to the first plate (40) when the resilient actuator (44) rotates in a first direction of rotation, and wherein the second plate (42) is configured to be movable in a second different opposing longitudinal direction relative to the first plate (40) when the resilient actuator (44) rotates in a second different direction of rotation.

11. The apparatus as claimed in claim 1 wherein the angle between the resilient actuator (44) when In the second position and when in the third position is about 90 degrees.

12. The apparatus as claimed in claim 1 wherein the angle between the resilient actuator (44) when in the second position and when in the third position is about 30 degrees to about 60 degrees.

13. The apparatus as claimed in claim 1 wherein the first profile has a generally angled shape extending between two stop regions (68, 70).

14. A method of manufacturing an apparatus, the method comprising:
providing a first plate (40);
providing a second plate (42), the second plate comprising a slot (60);
providing a cam section (64) comprising a first profile (66), the cam section being attached to, or integrally formed with, the first plate (40); and
providing a resilient actuator (44),
wherein a first connecting end (56) of the resilient actuator (44) is configured to be rotatably connected to the first plate (40),
wherein a second connecting end (58) of the resilient actuator (44) is configured to be movably connected to the slot (60) of the second plate (42) and configured to slide or move or roll along the first profile (66) of the cam section (64), such that:
as the first plate (40) is slid with respect to the second plate (42) in a first direction against the bias of the resilient actuator (44) from a first position to a second position, during which the first profile (66) and the second connecting end (58) are operably engaged, the second connecting end (58) of the resilient actuator (44) is configured to:
slide along the slot (60); and
slide or roll along the first profile (66) of the cam section (64); and
as the first plate (40) is slid with respect to the second plate (42) in a second direction opposite to the first direction, from the first position to a third position, the third position being a position in which the first profile (66) and the second connecting end (58) are operably disengaged:
the first connecting end (56) is configured to rotate about its rotatable connection to the first plate (40);
the second connecting end (58) is configured to rotate within the slot (60); and
the resilient actuator (44) is configured to semi-automatically rotate through a first movement portion where the resilient actuator (44) is configured to move to overcome the bias of the resilient actuator (44) and a second movement portion which is configured to be automatic under the bias of the resilient actuator (44).

## Patentansprüche

1. Vorrichtung, umfassend einen Schiebemechanismus, wobei der Schiebemechanismus Folgendes umfasst:
eine erste Platte (40);
eine zweite Platte (42), wobei die zweite Platte einen Schlitz (60) umfasst;
einen Nockenabschnitt (64), der ein erstes Profil (66) umfasst, wobei der Nockenabschnitt (64) an der ersten Platte (40) befestigt oder einstückig damit ausgebildet ist; und einen elastischen Betätiger (44);
wobei ein erstes Verbindungsende (56) des elastischen Betätigers (44) konfiguriert ist, um drehbar mit der ersten Platte (40) verbunden zu werden, und ein zweites Verbindungsende (58) des elastischen Betätigers (44) konfiguriert ist, um mit dem Schlitz (60) der zweiten Platte (42) beweglich verbunden zu werden, und zum Gleiten oder Bewegen oder Rollen entlang des ersten Profils (66) des Nockenabschnitts (64) konfiguriert ist, sodass:
wenn die erste Platte (40) in Bezug auf die zweite Platte (42) in eine erste Richtung gegen die Vorspannung des elastischen Betätigers (44) von einer ersten Position zu einer zweiten Position gleitet, während das erste Profil (66) und das zweite Verbindungsende (58) kraft der Vorspannung des elastischen Betätigers (44) betriebswirksam in Eingriff sind, das zweite Verbindungsende (58) des elastischen Betätigers (44) konfiguriert ist, um sich wie folgt zu bewegen: Gleiten entlang des Schlitzes (60); und
Gleiten oder Rollen entlang des ersten Profils (66) des Nockenabschnitts (64);
während die erste Platte (40) in Bezug auf die zweite Platte (42) in eine zweite Richtung entgegen der ersten Richtung von der ersten Position zu einer dritten Position gleitet, wobei die dritte Position eine Position ist, bei der das erste Profil (66) und das zweite Verbindungsende (58) betriebswirksam außer Eingriff gebracht sind:
wobei das erste Verbindungsende (56) um seine Drehverbindung zu der ersten Platte (40) gedreht wird;
das zweite Verbindungsende (58) innerhalb des Schlitzes (60) gedreht wird; und der elastische Betätiger (44) halbautomatisch durch einen ersten Bewegungsabschnitt gedreht wird, wobei der elastische Betätiger (44) bewegt wird, um die Vorspannung des elastischen Betätigers (44) zu überwinden, und durch einen zweiten Bewegungsabschnitt, der automatisch unter Vorspannung des elastischen Betätigers (44) ist.

2. Vorrichtung nach Anspruch 1, wobei die zweite Platte (42) konfiguriert ist, um in die erste Richtung zwischen drei Positionen aus der dritten Position zu der ersten Position und dann zu der zweiten Position beweglich zu sein.

3. Vorrichtung nach Anspruch 2, wobei die zweite Platte (42) konfiguriert ist, um in die zweite Richtung zwischen drei Positionen aus der zweiten Position zu der ersten Position und dann zu der dritten Position beweglich zu sein.

4. Vorrichtung nach einem der vorherigen Ansprüche, wobei der Schiebemechanismus zum automatischen Stoppen der zweiten Platte (42) in der zweiten Position konfiguriert ist, wenn sich die zweite Platte (42) in die erste Richtung in Bezug auf die erste Platte (40) bewegt.

5. Vorrichtung nach einem der vorherigen Ansprüche, wobei die zweite Platte (42) konfiguriert ist, um in Bezug auf die erste Platte (40) in mindestens eine Richtung manuell beweglich zu sein.

6. Vorrichtung nach einem der vorherigen Ansprüche, wobei der Schiebemechanismus zum halbautomatischen Bewegen der ersten Platte (40) in Bezug auf die zweite Platte (42) von der ersten Position zu der zweiten Position konfiguriert ist.

7. Vorrichtung nach einem der vorherigen Ansprüche, wobei der Schlitz (60) eine im Wesentlichen gerade lineare Form aufweist und konfiguriert ist, um im Wesentlichen senkrecht zu der Schiebeachse der ersten Richtung ausgerichtet zu sein.

8. Vorrichtung nach einem der vorherigen Ansprüche, wobei die Vorrichtung eine tragbare elektronische Vorrichtung ist.

9. Vorrichtung nach einem der vorherigen Ansprüche, wobei die Vorrichtung ein mobiles Telefon, eine Spielevorrichtung oder ein PDA ist.

10. Vorrichtung nach Anspruch 1, wobei die zweite Platte (42) konfiguriert ist, um in eine erste Längsrichtung in Bezug auf die erste Platte (40) beweglich zu sein, wenn der elastische Betätiger (44) in eine erste Drehrichtung dreht, und
wobei die zweite Platte (42) konfiguriert ist, um in eine zweite, andere, entgegengesetzte Längsrichtung in Bezug auf die erste Platte (40) beweglich zu sein, wenn der elastische Betätiger (44) in eine zweite andere Drehrichtung dreht.

11. Vorrichtung nach Anspruch 1, wobei der Winkel zwischen dem elastischen Betätiger (44) in der zweiten Position und in der dritten Position etwa 90 Grad beträgt.

12. Vorrichtung nach Anspruch 1, wobei der Winkel zwischen dem elastischen Betätiger (44) in der zweiten Position und in der dritten Position etwa 30 Grad bis etwa 60 Grad beträgt.

13. Vorrichtung nach Anspruch 1, wobei das erste Profil eine allgemein winkelige Form aufweist, die sich zwischen zwei Anschlagsbereichen (68, 70) erstreckt.

14. Verfahren zur Herstellung einer Vorrichtung, wobei das Verfahren Folgendes umfasst:
Bereitstellen einer ersten Platte (40);
Bereitstellen einer zweiten Platte (42), wobei die zweite Platte einen Schlitz (60) umfasst;
Bereitstellen eines Nockenabschnitts (64), der ein erstes Profil (66) umfasst, wobei der Nockenbereich an der ersten Platte (40) befestigt oder einstückig damit ausgebildet ist; und
Bereitstellen eines elastischen Betätigers (44),
wobei ein erstes Verbindungsende (56) des elastischen Betätigers (44) konfiguriert ist, um drehbar mit der ersten Platte (40) verbunden zu werden,
wobei ein zweites Verbindungsende (58) des elastischen Betätigers (44) konfiguriert ist, um beweglich mit dem Schlitz (60) der zweiten Platte (42) verbunden zu werden, und zum Gleiten oder Bewegen oder Rollen entlang des ersten Profils (66) des Nockenabschnitts (64) konfiguriert ist, sodass:
während die erste Platte (40) in Bezug auf die zweite Platte (42) in eine erste Richtung gegen die Vorspannung des elastischen Betätigers (44) von einer ersten Position zu einer zweiten Position gleitet, während das erste Profil (66) und das zweite Verbindungsende (58) betriebswirksam kraft der Vorspannung des elastischen Betätigers (44) in Eingriff sind, das zweite Verbindungsende (58) des elastischen Betätigers (44) konfiguriert ist, um sich wie folgt zu bewegen:
Gleiten entlang des Schlitzes (60); und
Gleiten oder Rollen entlang des ersten Profils (66) des Nockenabschnitts (64); und, wenn die erste Platte (40) in Bezug auf die zweite Platte (42) in eine zweite Richtung entgegen der ersten Richtung von der ersten Position zu einer dritten Position gleitet, die dritte Position eine Position ist, bei der das erste Profil (66) und das zweite Verbindungsende (58) betriebswirksam außer Eingriff gebracht sind, wobei
das erste Verbindungsende (56) zum Drehen um seine Drehverbindung mit der ersten Platte (40) konfiguriert ist;
das zweite Verbindungsende (58) zum Drehen innerhalb des Schlitzes (60) konfiguriert ist; und
der elastische Betätiger (44) zum halbautomatischen Drehen durch einen ersten Bewegungsabschnitt konfiguriert ist, wobei der elastische Betätiger (44) konfiguriert ist, um sich zu bewegen und die Vorspannung des elastischen Betätigers (44) zu überwinden, und ein zweiter Bewegungsabschnitt konfiguriert ist, automatisch unter Vorspannung des elastischen Betätigers (44) zu sein.

## Revendications

1. Appareil comprenant un mécanisme coulissant, le mécanisme coulissant comprenant :
une première plaque (40) ;
une deuxième plaque (42), la deuxième plaque comprenant une fente (60) ;
une section de came (64) comprenant un premier profil (66), la section de came (64) étant attachée à la première plaque (40) ou étant formée intégralement avec celle-ci ; et
un actionneur élastique (44),
une première extrémité de connexion (56) de l'actionneur élastique (44) étant configurée pour être connectée de manière rotative à la première plaque (40), et
une deuxième extrémité de connexion (58) de l'actionneur élastique (44) étant configurée pour être connectée de manière déplaçable à la fente (60) de la deuxième plaque (42) et étant configurée pour coulisser ou se déplacer ou rouler le long du premier profil (66) de la section de came (64), de telle sorte que :
à mesure que la première plaque (40) coulisse par rapport à la deuxième plaque (42) dans une première direction à l'encontre de la sollicitation de l'actionneur élastique (44) depuis une première position jusqu'à une deuxième position, coulissement au cours duquel le premier profil (66) et la deuxième extrémité de connexion (58) sont engagés fonctionnellement par le biais de la sollicitation de l'actionneur élastique (44), la deuxième extrémité de connexion (58) de l'actionneur élastique (44) soit configurée pour se déplacer :
en coulissant le long de la fente (60) ; et
en coulissant ou en roulant le long du premier profil (66) de la section de came (64) ; et
à mesure que la première plaque (40) coulisse par rapport à la deuxième plaque (42) dans une deuxième direction opposée à la première direction, depuis la première position jusqu'à une troisième position, la troisième position étant une position dans laquelle le premier profil (66) et la deuxième extrémité de connexion (58) sont désengagés fonctionnellement :
la première extrémité de connexion (56) soit tournée autour de sa connexion rotative à la première plaque (40) ;
la deuxième extrémité de connexion (58) soit tournée à l'intérieur de la fente (60) ; et
l'actionneur élastique (44) soit tourné de manière semi-automatique sur une première portion de mouvement dans laquelle l'actionneur élastique (44) est déplacé de manière à surmonter la sollicitation de l'actionneur élastique (44) et une deuxième portion de mouvement qui est automatiquement soumise à la sollicitation de l'actionneur élastique (44).

2. Appareil selon la revendication 1, dans lequel la deuxième plaque (42) est configurée pour pouvoir être déplacée dans la première direction entre les trois positions depuis la troisième position, jusqu'à la première position puis jusqu'à la deuxième position.

3. Appareil selon la revendication 2, dans lequel la deuxième plaque (42) est configurée pour pouvoir être déplacée dans la deuxième direction entre les trois positions, depuis la deuxième position, jusqu'à la première position, puis jusqu'à la troisième position.

4. Appareil selon l'une quelconque des revendications précédentes, dans lequel le mécanisme coulissant est configuré pour arrêter automatiquement la deuxième plaque (42) à la deuxième position lorsque la deuxième plaque (42) se déplace dans la première direction par rapport à la première plaque (40).

5. Appareil selon l'une quelconque des revendications précédentes, dans lequel la deuxième plaque (42) est configurée pour pouvoir être déplacée manuellement par rapport à la première plaque (40) dans au moins une direction.

6. Appareil selon l'une quelconque des revendications précédentes, dans lequel le mécanisme coulissant est configuré pour déplacer de manière semi-automatique la première plaque (40) par rapport à la deuxième plaque (42) depuis la première position jusqu'à la deuxième position.

7. Appareil selon l'une quelconque des revendications précédentes, dans lequel la fente (60) a une forme substantiellement linéaire droite et est configurée pour être orientée substantiellement perpendiculairement à l'axe de coulissement de la première direction.

8. Appareil selon l'une quelconque des revendications précédentes, dans lequel l'appareil est un dispositif électronique portable.

9. Appareil selon l'une quelconque des revendications précédentes, dans lequel l'appareil est un téléphone portable, une console de jeu, ou un PDA.

10. Appareil selon la revendication 1, dans lequel la deuxième plaque (42) est configurée pour pouvoir être déplacée dans une première direction longitudinale par rapport à la première plaque (40) lorsque l'actionneur élastique (44) tourne dans une première direction de rotation, et dans lequel la deuxième plaque (42) est configurée pour pouvoir être déplacée dans une deuxième direction longitudinale opposée différente par rapport à la première plaque (40) lorsque l'actionneur élastique (44) tourne dans une deuxième direction de rotation différente.

11. Appareil selon la revendication 1, dans lequel l'angle entre l'actionneur élastique (44) lorsqu'il est dans la deuxième position et lorsqu'il est dans la troisième position est d'environ 90 degrés.

12. Appareil selon la revendication 1, dans lequel l'angle entre l'actionneur élastique (44) lorsqu'il est dans la deuxième position et lorsqu'il est dans la troisième position est compris entre environ 30 degrés et environ 60 degrés.

13. Appareil selon la revendication 1, dans lequel le premier profil a une forme généralement inclinée s'étendant entre deux régions de butée (68, 70).

14. Procédé de fabrication d'un appareil, le procédé comprenant :
fournir une première plaque (40) ;
fournir une deuxième plaque (42), la deuxième plaque comprenant une fente (60) ;
fournir une section de came (64) comprenant un premier profil (66), la section de came étant attachée à la première plaque (40) ou étant formée intégralement avec celle-ci ; et
fournir un actionneur élastique (44),
une première extrémité de connexion (56) de l'actionneur élastique (44) étant configurée pour être connectée de manière rotative à la première plaque (40),
une deuxième extrémité de connexion (58) de l'actionneur élastique (44) étant configurée pour être connectée de manière déplaçable à la fente (60) de la deuxième plaque (42) et étant configurée pour coulisser ou se déplacer ou rouler le long du premier profil (66) de la section de came (64), de telle sorte que :
à mesure que la première plaque (40) coulisse par rapport à la deuxième plaque (42) dans une première direction à l'encontre de la sollicitation de l'actionneur élastique (44) depuis une première position jusqu'à une deuxième position, coulissement au cours duquel le premier profil (66) et la deuxième extrémité de connexion (58) sont engagés fonctionnellement, la deuxième extrémité de connexion (58) de l'actionneur élastique (44) soit configurée pour :
coulisser le long de la fente (60) ; et
coulisser ou rouler le long du premier profil (66) de la section de came (64) ; et à mesure que la première plaque (40) coulisse par rapport à la deuxième plaque (42) dans une deuxième direction opposée à la première direction, depuis la première position jusqu'à une troisième position, la troisième position étant une position dans laquelle le premier profil (66) et la deuxième extrémité de connexion (58) sont désengagés fonctionnellement :
la première extrémité de connexion (56) soit configurée de manière à tourner autour de sa connexion rotative par rapport à la première plaque (40) ;
la deuxième extrémité de connexion (58) soit configurée de manière à tourner à l'intérieur de la fente (60) ; et
l'actionneur élastique (44) soit configuré pour tourner de manière semi-automatique sur une première portion de mouvement dans laquelle l'actionneur élastique (44) est configuré pour se déplacer de manière à surmonter la sollicitation de l'actionneur élastique (44) et une deuxième portion de mouvement qui est configurée pour être soumise automatiquement à la sollicitation de l'actionneur élastique (44).
